# EUROPEAN PATENT APPLICATION

(11) **EP 4 814 026 A1**
(43) Date of publication of application: **30.09.2026**
(21) Application number: 24894685.7
(22) Date of filing: 22.11.2024
(51) Int. Cl.: C08F 220/44, C08F 220/18, C08F 220/20, H01M 50/42, H01M 50/446, H01M 50/449, H01M 50/431, H01M 10/052

(54) **COPOLYMER FOR SEPARATOR AND SECONDARY BATTERY COMPRISING SAME**

(30) Priority: 22.11.2023 KR 20230163116
(71) Applicant: Hansol Chemical Co., Ltd, Seoul 06169 (KR)
(72) Inventor: KIM, Young-Su, Wanju-gun, Jeonbuk-do 55321 (KR); LEE, Nam-Joo, Wanju-gun, Jeonbuk-do 55321 (KR); KIM, Jin-Yeong, Wanju-gun, Jeonbuk-do 55321 (KR); LEE, Go-Eun, Wanju-gun, Jeonbuk-do 55321 (KR); CHO, Seung-Wan, Wanju-gun, Jeonbuk-do 55321 (KR); LEE, Sang-Won, Wanju-gun, Jeonbuk-do 55321 (KR); OH, Sae-Wook, Wanju-gun, Jeonbuk-do 55321 (KR); KWON, Se-Man, Wanju-gun, Jeonbuk-do 55321 (KR)
(74) Representative: Ipsilon
(86) International application number: PCT/KR2024/018623
(87) International publication number: WO 2025/110794

(57) **Abstract**

The present invention relates to: a copolymer comprising an acrylonitrile-based monomer unit, an acrylate-based monomer unit containing a C1-20 linear alkyl group, an acrylate-based monomer unit containing a C3-10 branched alkyl group, an acrylic acid-based monomer unit, and a monomer unit containing a C1-20 linear or branched alkyl group including a hydroxyl group; and a slurry composition, a separator, and a secondary battery, which comprise the copolymer.

## Description

### Technical Field

The present disclosure relates to a copolymer, and a slurry composition, a separator, and a secondary battery including the copolymer.

### Background Art

Lithium secondary batteries exhibit high energy density and thus are used widely in electrical, electronic, telecommunication, and computer fields. Furthermore, application fields of lithium secondary batteries are expanding to high-capacity secondary batteries for hybrid vehicles, electric vehicles, and the like, in addition to small lithium secondary batteries for portable electronic devices.

Although lithium-ion secondary batteries are insulated by separators, short circuits between positive and negative electrodes may occur due to internal or external battery abnormalities or impacts, which may lead to heat generation and explosion. Accordingly, ensuring the thermal and chemical safety of separators is extremely important.

Currently, polyolefin-based films are widely used as separators. However, polyolefins undergo severe thermal shrinkage at high temperatures and exhibit poor mechanical properties, which are disadvantageous.

To enhance the stability of such polyolefin-based separators, porous separators in which a polyolefin porous substrate film is coated with a mixture of inorganic particles and a binder have been developed.

In other words, to suppress battery instability caused by dendrites and thermal shrinkage of polyolefin-based separators at high temperatures, one or both sides of the porous separator substrate are coated with inorganic particles together with a binder, thereby enabling the inorganic particles to function to suppress the shrinkage rate of the substrate while manufacturing a further safe separator by means of the coating layer.

In the meantime, an electrode adhesive layer on the separator reduces voids between the electrodes, facilitates lithium ion transport, and serves as a migration pathway.

In order to exhibit these electrode adhesion properties, a coating method (a once-coated separator, OCS) in which a separator is coated with a resin dispersed in an inorganic substance, a coating method (a double-coated separator, DCS) in which an upper portion of a ceramic-coated separator (CCS) is coated with a resin, and the like are used.

To reduce the volume of an electrode attached to such a coated separator and to protect the electrode, a lamination technique using heat and pressure is employed.

When multiple layers are stacked to manufacture a battery with high energy density, pressure is transferred into the battery, whereas heat is not properly transferred. As a result, the adhesion of the coated separator may decrease, leading to void formation.

In addition, to obtain excellent battery characteristics, the coating layer is required not only to be uniformly coated but also to have strong adhesion to the substrate.

In particular, in high-capacity secondary batteries, the faster the charge/discharge rate, the more densely the electrodes are stacked layer by layer, leading to the formation of larger and more numerous voids (dead spaces) within the secondary battery.

Such formed voids increase the internal resistance of the secondary battery and reduce battery life. When applying a resin having electrode adhesion properties onto a separator, deterioration of secondary battery performance due to voids may be significantly reduced.

### [Documents of related art]

### [Patent Documents]

(Patent Document 1) Korean Patent No. 10-1430975
(Patent Document 2) Korean Patent Application Publication No. 10-2006-0072065

### Disclosure

### Technical Problem

Accordingly, the present disclosure aims to provide a slurry composition in which migration is facilitated using a copolymer, thereby exhibiting excellent electrode adhesion to a porous substrate.

In addition, the present disclosure aims to provide a separator having excellent adhesion and air permeability by applying the slurry composition, and a battery having excellent performance (electrical resistance properties) using the separator.

However, the problems to be solved by the present application are not limited to the aforementioned description, and other problems not mentioned can be clearly understood by those skilled in the art from the following description.

### Technical Solution

In one aspect of the present application, a copolymer including an acrylonitrile-based monomer unit,
an acrylate-based monomer unit containing a straight-chain alkyl group having 1 to 20 carbon atoms,
an acrylate-based monomer unit containing a branched-chain alkyl group having 3 to 10 carbon atoms,
an acrylic acid-based monomer unit, and
a monomer unit containing a hydroxyl group-containing straight-chain or branched-chain alkyl group having 1 to 20 carbon atoms,
is provided.
In another aspect of the present application,
a slurry composition including the copolymer and
inorganic particles
is provided.

In a further aspect of the present application, a separator including the slurry composition
is provided.

In yet another aspect of the present application, a secondary battery including the separator
is provided.

### Advantageous Effects

A copolymer of the present disclosure can increase electrode adhesion to a separator substrate by facilitating migration, and can improve the heat resistance and air permeability of a separator.

In addition, the copolymer of the present disclosure can reduce defect rates during the lamination process in battery assembly, minimize void formation, and enhance air permeability and ionic conductivity in the electrolyte.

In the meantime, by using the copolymer of the present disclosure, the adhesion of the separator can be maximized, and ultimately, the electrical resistance properties and stability of a battery can be enhanced while minimizing battery defects.

### Description of Drawings

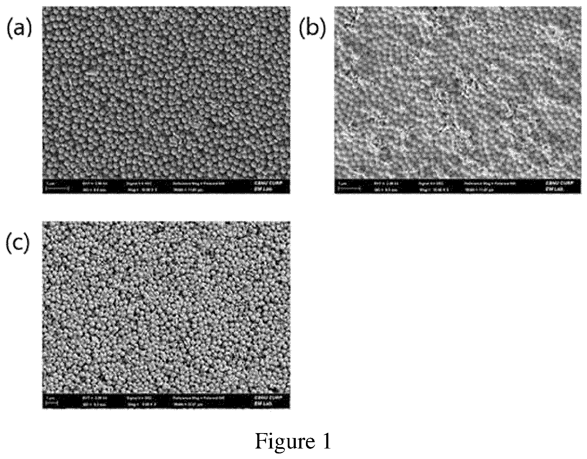

FIG. 1 shows scanning electron microscopy (SEM) observation results following Evaluation Example 4, in which migration in separators manufactured according to Examples 1 to 3 of the present application is measured, wherein FIGS. 1A, 1B, and 1C correspond to the SEM observation results of the separators manufactured according to Examples 1, 2, and 3, respectively.

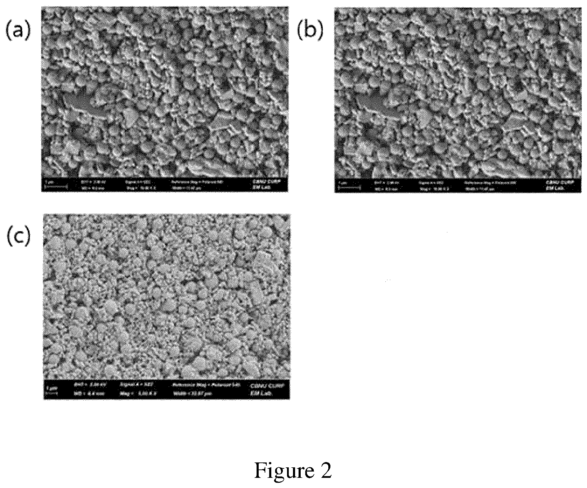

FIG. 2 shows SEM observation results following Evaluation Example 4, in which migration in separators manufactured according to Comparative Examples 1 to 3 of the present application is measured, wherein FIGS. 2A, 2B, and 2C correspond to the SEM observation results of the separators manufactured according to Comparative Examples 1, 2, and 3, respectively.

### Best Mode

Hereinafter, the action and effect of the present disclosure will be described in more detail through specific embodiments of the present disclosure. However, these embodiments are provided only for illustrative purposes of the present disclosure, and the scope of the present disclosure is not limited thereby.

Before discussing the details, it should be noted that all terms or words used herein and used in the appended claims are not construed as being limited to general or dictionary meanings but will be interpreted based on the meanings and concepts corresponding to the technical ideas of the present disclosure, following the principle that any inventor is allowed to define the concepts of terms as appropriate to describe the disclosure thereof in the best mode.

Therefore, the embodiments described herein are configured merely as one of the most preferable examples of the present disclosure and do not exhaustively represent the technical idea of the present disclosure. Accordingly, it should be appreciated that there may be various equivalents and modifications that can replace these embodiments as of the filing date of the present application.

As used herein, the singular expressions are intended to include the plural forms unless the context clearly indicates otherwise. It will be further understood that the terms "comprise", "include", "have", and the like when used herein, are intended to specify the presence of stated features, integers, steps, constituent elements, or combinations thereof but do not preclude the possibility of the presence or addition of one or more other features, integers, steps, constituent elements, or combinations thereof.

As used herein, the expression "a to b" to represent a numerical range is defined as ≥ a and ≤ b.

A copolymer according to one aspect of the present application may include: an acrylonitrile-based monomer unit; an acrylate-based monomer unit containing a straight-chain alkyl group having 1 to 20 carbon atoms; an acrylate-based monomer unit containing a branched-chain alkyl group having 3 to 10 carbon atoms; an acrylic acid-based monomer unit; and a monomer unit containing a hydroxyl group-containing straight-chain or branched-chain alkyl group having 1 to 20 carbon atoms.

The hydroxyl group in the monomer unit containing a hydroxyl group-containing straight-chain or branched-chain alkyl group having 1 to 20 carbon atoms may increase electrode adhesion to a separator substrate by facilitating migration, improve heat resistance and air permeability of a separator, and enhance battery performance.

In addition, the copolymer including the monomer unit containing a hydroxyl group-containing straight-chain or branched-chain alkyl group having 1 to 20 carbon atoms is prepared by an emulsion polymerization method, and may be configured such that hydrophilic groups tend to be exposed outward during reaction and structure formation.

Accordingly, after a slurry including the copolymer and inorganic particles is applied onto a separator, followed by coating and drying to form a coating layer, migration in which the copolymer is located in the upper portion of the coating layer may be observed in particular.

The copolymer located in the upper portion of the coating layer due to migration may contribute to an increase in the contact area between the separator and the adhesive, resulting in high adhesion.

In addition, the migration enables the content of the copolymer, which may act relatively as a resistance factor in the coating layer, to be maintained at a low level, so that the free movement of lithium ions (Li ions), which is the main function of the separator, is possible, thereby improving the air permeability of the separator and keeping battery resistance low.

In an embodiment, the copolymer, based on 100 wt% of the total weight thereof, may include: 1 wt% or more and 40 wt% or less of the acrylonitrile-based monomer unit, 1 wt% or more and 35 wt% or less of the acrylate-based monomer unit containing a straight-chain alkyl group having 1 to 20 carbon atoms, 10 wt% or more and 50 wt% or less of the acrylate-based monomer unit containing a branched-chain alkyl group having 3 to 10 carbon atoms, 1 wt% or more and 20 wt% or less of the acrylic acid-based monomer unit, and 1 wt% or more and 20 wt% or less of the monomer unit containing a hydroxyl group-containing straight-chain or branched-chain alkyl group having 1 to 10 carbon atoms.

For example, the copolymer, based on 100 wt% of the total weight thereof, may include: 10 wt% or more and 35 wt% or less of the acrylonitrile-based monomer unit, 10 wt% or more and 30 wt% or less of the acrylate-based monomer unit containing a straight-chain alkyl group having 1 to 20 carbon atoms, 15 wt% or more and 40 wt% or less of the acrylate-based monomer unit containing a branched-chain alkyl group having 3 to 10 carbon atoms, 1 wt% or more and 15 wt% or less of the acrylic acid-based monomer unit, and 1 wt% or more and 20 wt% or less of the monomer unit containing a hydroxyl group-containing straight-chain or branched-chain alkyl group having 1 to 10 carbon atoms.

When the content of the acrylonitrile-based monomer unit exceeds or falls below the aforementioned range, the dispersibility of polymer particles and an inorganic slurry may decrease, or adhesion may decrease.

When the content of the acrylate-based monomer unit containing a straight-chain alkyl group having 1 to 20 carbon atoms and the content of the acrylate-based monomer unit containing a branched-chain alkyl group having 3 to 10 carbon atoms exceed or fall below the aforementioned ranges, adhesion may decrease.

When the content of the acrylic acid-based monomer unit exceeds or falls below the aforementioned range, polymer aggregation and precipitation may occur, or adhesion may decrease.

When the content of the monomer unit containing a hydroxyl group-containing straight-chain or branched-chain alkyl group having 1 to 10 carbon atoms exceeds or falls below the aforementioned range, adhesion may decrease. As a result, separator performance and battery performance may deteriorate, which is problematic.

In one embodiment, the acrylate-based monomer unit containing a straight-chain alkyl group having 1 to 20 carbon atoms may be formed by polymerization of methyl acrylate, methyl methacrylate, ethyl acrylate, ethyl methacrylate, propyl acrylate, propyl methacrylate, butyl acrylate, butyl methacrylate, lauryl acrylate, lauryl methacrylate, stearyl acrylate, stearyl methacrylate, or a combination thereof.

For example, the acrylate-based monomer unit containing a straight-chain alkyl group having 1 to 20 carbon atoms may be formed by polymerization of methyl methacrylate, butyl acrylate, or a combination thereof.

In addition, the acrylate-based monomer unit containing a branched-chain alkyl group having 3 to 10 carbon atoms may be formed by polymerization of isopropyl acrylate, isopropyl methacrylate, sec-butyl acrylate, sec-butyl methacrylate, tert-butyl acrylate, tert-butyl methacrylate, 2-ethylhexyl acrylate, 2-ethylhexyl methacrylate, or a combination thereof.

For example, the acrylate-based monomer unit containing a branched-chain alkyl group having 3 to 10 carbon atoms may be formed by polymerization of 2-ethylhexyl acrylate.

The acrylic acid-based monomer unit may be formed by polymerization of acrylic acid, methacrylic acid, or a combination thereof.

For example, the acrylic acid-based monomer unit may be formed by polymerization of methacrylic acid.

In the meantime, the acrylonitrile-based monomer unit may be formed by polymerization of acrylonitrile, methacrylonitrile, or a combination thereof.

For example, the acrylonitrile-based monomer unit may be formed by polymerization of acrylonitrile.

In one embodiment, the monomer unit containing a hydroxyl group-containing straight-chain or branched-chain alkyl group having 1 to 10 carbon atoms may be formed by polymerization of 2-hydroxyethyl acrylate, hydroxypropyl acrylate, 4-hydroxybutyl acrylate, or a combination thereof.

A monomer polymerizable to form the monomer unit containing a hydroxyl group-containing straight-chain or branched-chain alkyl group having 1 to 10 carbon atoms may be configured such that the hydroxyl group is located at the terminal of the straight-chain or branched-chain alkyl group.

In one embodiment, the acrylic acid-based monomer unit may be bonded to an alkali metal.

In other words, the carboxylate group in the acrylic acid-based monomer unit may be bonded to an alkali metal, an alkali metal-containing hydroxide, or a combination thereof.

The alkali metal may be Li, K, Na, or a combination thereof.

In the meantime, a weight ratio of the alkali metal to the copolymer (weight of the alkali metal:weight of the copolymer) may be in the range of 1 to 5:100.

When the weight ratio of the alkali metal to the copolymer exceeds or falls below the aforementioned ratio, the adhesion properties of a separator may deteriorate. In particular, electrode adhesion to and peel adhesion of the separator may decrease.

The adhesion of the separator containing the alkali metal may be determined by forces, such as cohesion and repulsion among elements.

In the copolymer of the present application, shifts in the relative balance of cohesion, adhesion, and repulsion among elements may occur depending on the alkali metal content, resulting in changes in adhesion to inorganic materials or to an electrode.

The use of the alkali metal in the preparation of the binder copolymer may enhance overall adhesion through the combination of adhesion and cohesion due to increased cohesion among elements. However, the addition of the alkali metal in excessive amounts may rather lead to decreased cohesion, resulting in reduced overall adhesion.

In the meantime, enhancement in the adhesion to inorganic materials refers to increased adhesion between such inorganic materials and a substrate, which may, in turn, mean that the heat-resistant properties of the separator can be enhanced by the increased amount of the inorganic materials.

The electrode adhesion to the separator may reduce defect rates during electrode loading in battery assembly, while minimizing void formation and enhancing ionic conductivity in an electrolyte.

Additionally, a single coating of a binder layer on an inorganic coating layer may maximize electrode adhesion, which may ultimately minimize battery defect rates and further improve battery performance.

In the meantime, enhancement in the adhesion to inorganic materials refers to increased adhesion between such inorganic materials and a substrate, which may, in turn, mean that the heat-resistant properties of the separator can be enhanced by the increased amount of the inorganic materials.

The electrode adhesion to the separator may reduce defect rates during electrode loading in battery assembly, while minimizing void formation and enhancing ionic conductivity in an electrolyte.

Additionally, a single coating of a binder layer on an inorganic coating layer may maximize electrode adhesion, which may ultimately minimize battery defect rates and further improve battery performance.

In one embodiment, the copolymer, based on 100 wt% of the total weight thereof, may further include 15 wt% or less of a vinyl acetate-based monomer unit.

For example, the copolymer, based on 100 wt% of the total weight thereof, may further include 10 wt% or less of the vinyl acetate-based monomer unit.

When the content of the vinyl acetate-based monomer unit exceeds or falls below the aforementioned range, problems with stability, such as storage stability, may occur.

In addition, the vinyl acetate-based monomer unit may be formed by polymerization of vinyl acetate monomers.

In one embodiment, the copolymer may include a monomer repeating unit represented by Formula 1 below.

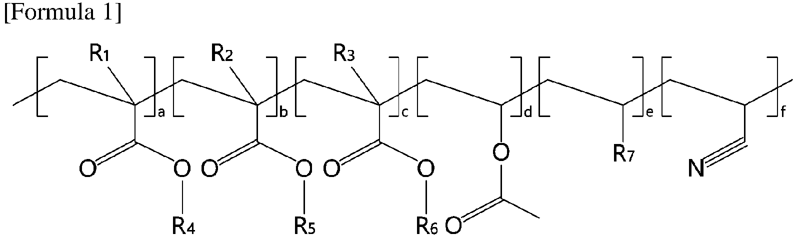

In Formula 1, R₁ to R₃ are each independently hydrogen, a straight-chain or branched-chain hydrocarbon having 1 to 4 carbon atoms, or a combination thereof, R₄ is a straight-chain alkyl group having 1 to 20 carbon atoms, R₅ is a branched-chain alkyl group having 3 to 10 carbon atoms, R₆ is a hydroxyl group-containing straight-chain or branched-chain alkyl group having 1 to 10 carbon atoms, R₇ is COOM, where M is hydrogen, an alkali metal, or a combination thereof, 0.01 ≤ a ≤ 0.35, 0.1 ≤ b ≤ 0.5, 0.01 ≤ c ≤ 0.2, 0 ≤ d ≤ 0.15, 0.01 ≤ e ≤ 0.2, and 0.01 ≤ f ≤ 0.4, and a + b + c + d + e + f = 1.

In Formula 1, a, b, c, d, e, and f correspond to the weight fractions of the respective monomer units, and the sum of the weight fractions of the respective monomer units equals 1.

In one embodiment, R₁ to R₃ in Formula 1 may each independently include one or more selected from the group consisting of hydrogen, methyl, and ethyl.

In addition, R₄ may be methyl, ethyl, n-propyl, n-butyl, tert-butyl, n-pentyl, n-hexyl, n-heptyl, n-octyl, n-nonyl, n-decyl, n-undecyl, lauryl, n-dodecyl, n-tridecyl, n-tetradecyl, n-pentadecyl, cetyl, n-hexadecyl, n-heptadecyl, stearyl, n-octadecyl, n-nonadecyl, n-eicosyl, n-heneicosyl, n-docosyl, or a combination thereof, and R₅ may be isopropyl, tert-butyl, sec-butyl, 2-ethylhexyl, n-nonyl, n-decyl, isopentyl, isoheptyl, isooctyl, isononyl, isodecyl, or a combination thereof.

In the meantime, R₆ in Formula 1 may be 2-hydroxyethyl, hydroxypropyl, 4-hydroxybutyl, or a combination thereof.

In one embodiment, the copolymer may be a random or block copolymer depending on a synthesis process.

In one embodiment, the copolymer may have a number average molecular weight in the range of 10,000 to 1,000,000.

When the number average molecular weight of the copolymer is less than 10,000, the fluidity of the copolymer may increase, thereby decreasing dispersibility and deteriorating the heat-resistant properties of a separator. When the number average molecular weight exceeds 1,000,000, the viscosity may be excessively high for use, and the pores of a separator may be blocked, resulting in poor air permeability and resistance.

A slurry composition according to another aspect of the present application may include the copolymer and inorganic particles.

As the inorganic particles, any insulating particles may be used without limitation. Preferably, insulating particles with a high dielectric constant are used.

Specific examples of the inorganic particles may include Al₂O₃, AlOOH, SiO₂, TiO₂, ZrO₂, ZnO, NiO, CaO, SnO₂, Y₂O₃, MgO, BaTiO₃, CaTiO₃, SrTiO₃, SiC, Li₃PO₄, Pb(Zr,Ti)O₃(PZT), (Pb,La)(Zr,Ti)O₃(PLZT), and mixtures thereof.

The inorganic particles are not particularly limited in size, but the average particle diameter thereof may, for example, be in the range of 0.01 to 30 µm and is more preferably in the range of 0.1 to 10 µm. When the average particle diameter of the inorganic particles is less than the above preferable range, dispersibility may decrease. When the average particle diameter of the inorganic particles exceeds the above preferable range, the thickness of the coating layer may increase after coating, thereby deteriorating mechanical properties.

In addition, the inorganic particles are not particularly limited in shape, but the shape thereof may, for example, be spherical, platy, elliptical, or irregular.

A separator according to a further aspect of the present application may include the slurry composition.

The separator may be manufactured by coating at least one side of a porous substrate film with the slurry composition or by forming the slurry composition into a film and laminating the resulting film to the porous substrate film.

In the meantime, the separator may be used as a separator for a secondary battery and, for example, as a separator for a lithium secondary battery.

One example of manufacturing the separator may include: Step (a) of preparing a polymer solution by dissolving or dispersing the copolymer in a solvent; Step (b) of adding inorganic particles to the polymer solution of Step a), followed by mixing; and Step (c) of coating one or more regions selected from the group consisting of the surface of a polyolefin-based separator substrate and some pores of the substrate with the resulting mixture of Step b), followed by drying.

First, 1) a polymer solution is prepared such that the copolymer is dissolved or dispersed in an appropriate solvent.

As the solvent, those having a solubility index similar to that of the copolymer used as a binder and having a low boiling point are preferably used. This is to facilitate uniform mixing and the subsequent solvent removal. Non-limiting examples of the solvents usable may include acetone, tetrahydrofuran, methylene chloride, chloroform, dimethylformamide, N-methyl-2-pyrrolidone (NMP), cyclohexane, water, or a mixture thereof. More preferably, the solvent is used in a water-dispersed state.

2) The inorganic particles are added to the prepared polymer solution and dispersed to prepare a mixture of the inorganic particles and the polymer.

Preferably, a process of dispersing the polymer solution and the inorganic particles is performed. In this case, the dispersion may be appropriately performed for 1 to 50 hours. Typical methods may be used as the dispersion method, and a ball milling method is particularly preferable.

The mixture composed of the inorganic particles and the polymer is not particularly limited in composition. However, depending on the composition of the mixture, the thickness, pore size, and porosity of the finally manufactured organic/inorganic composite porous separator of the present disclosure may be controlled.

In other words, the higher the ratio (I/P) of the inorganic particles (I) with respect to the polymer (P), the higher the porosity of the separator, which results in an increase in the thickness of the separator at the same solid content (total weight of the inorganic particles and the polymer). In addition, pores are more likely to be formed between the inorganic particles, thereby increasing the pore size. In this case, the larger the size (particle diameter) of the inorganic particles, the greater the interstitial distance therebetween, thereby increasing the pore size.

3) The upper portion of the prepared polyolefin-based separator substrate may be coated with the prepared mixture of the inorganic particles and the polymer, followed by drying, to obtain the separator of the present disclosure.

In this case, as a method of coating the upper portion of the polyolefin-based separator substrate with the mixture of the inorganic particles and the polymer, coating methods commonly known in the art may be used. For example, various methods such as dip coating, die coating, roll coating, comma coating, or combinations thereof may be used. In addition, when coating the upper portion of the polyolefin-based separator substrate with the mixture of the inorganic particles and the polymer, coating may be performed on both sides of the separator substrate or may be selectively performed on only one side.

In one embodiment, the copolymer may occupy 60% or more of the total area of a coating layer of the slurry composition on the surface of the separator, as measured by SEM.

For example, the copolymer may occupy 65% or more or 70% or more of the total area of the coating layer of the slurry composition on the surface of the separator.

When using the separator in a secondary battery, lithium ions may be transferred not only through the separator substrate but also through a porous active layer. Additionally, in the case where an external impact causes an internal short circuit, the aforementioned safety improvement effect can be exhibited.

In addition, the secondary battery may include a positive electrode, a negative electrode, the separator interposed between the positive and negative electrodes, and an electrolyte.

The secondary battery may be manufactured by methods commonly known in the art. In one embodiment thereof, the secondary battery is manufactured by interposing the separator between the electrodes to obtain an assembly and then injecting the electrolyte into the assembly.

The electrodes to be applied in conjunction with the separator are not particularly limited. However, typical positive electrode active materials usable in positive electrodes of secondary batteries may be used as a positive electrode active material, and non-limiting examples thereof may include lithium intercalation materials, such as lithium manganese oxide, lithium cobalt oxide, lithium nickel oxide, or a composite oxide formed by combinations thereof. In addition, typical negative electrode active materials usable in negative electrodes of existing electrochemical devices may be used as a negative electrode active material, and non-limiting examples thereof may include lithium metal or lithium alloys and lithium intercalation material, such as carbon, petroleum coke, activated carbon, graphite, or other carbon materials. The positive and negative electrodes are configured such that the aforementioned positive and negative electrode active materials are bound to a positive electrode current collector, that is, a foil made of aluminum, nickel, or a combination thereof, and a negative electrode current collector, that is, a foil made of copper, gold, nickel, copper alloys, or a combination thereof, respectively.

The electrolyte preferably has a form in which a salt having a structure such as A+B-, including alkali metal cations, such as Li+, Na+, and K+, or ions composed of combinations thereof, as A+ and anions, such as PF₆-, BF₄-, Cl-, Br-, I-, ClO₄-, AsF₆-, CH₃CO₂-, CF₃SO₃-, N(CF₃SO₂)₂-, and C(CF₂SO₂)₃-, or ions composed of combinations thereof, as B-, is dissolved and dissociated in an organic solvent composed of propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, NMP, ethyl methyl carbonate (EMC), gamma-butyrolactone (GBL), or a mixture thereof.

In addition to a typical winding process, a process in which the separator and the electrodes are stacked and folded is usable as a process of applying the separator to the battery.

### Mode for Invention

Hereinafter, the present application will be described in more detail using examples. However, the present application is not limited thereto.

### [Preparation Example 1] Preparation of Copolymer

To a four-necked flask reactor, 0.1 to 1 part by weight of an emulsifier was added with respect to a mixture including 200 parts by weight of distilled water, 5 parts by weight of acrylonitrile (AN), 5 parts by weight of butyl acrylate (BA), 1 part by weight of methacrylic acid (MAA), and 5 parts by weight of 2-ethylhexyl acrylate (2-EHA), followed by stirring. Then, the reactor was heated to 70°C with nitrogen gas purging.

In the reactor prepared at 70°C, 0.15 parts by weight of ammonium persulfate, serving as a thermally decomposable radical initiator, was mixed with 35 parts by weight of distilled water and added dropwise for 1 hour. At the same time, a monomer mixture including 25 parts by weight of AN, 10 parts by weight of BA, 10 parts by weight of MAA, 10 parts by weight of methyl methacrylate (MMA), 25 parts by weight of 2-EHA, and 10 parts by weight of a monomer containing a hydroxyl group-containing straight-chain or branched-chain alkyl group having 1 to 20 carbon atoms was added dropwise for 2 hours, thereby preparing a copolymer through an emulsion polymerization reaction.

An aqueous solution of metal hydroxides (NaOH, LiOH, and KOH) was added to the prepared copolymer to perform a neutralization reaction, thereby finally preparing a binder copolymer for a secondary battery separator.

### [Preparation Example 2] Preparation of Slurry for Porous Film Coating

Inorganic particles (boehmite (average particle diameter: 0.5 µm)) and the binder copolymer for a separator, prepared according to Preparation Example 1, were mixed to achieve a solid content weight ratio of 80:20, followed by adding and mixing additional distilled water to adjust the solid content concentration to 35 wt%. The resulting mixture was sufficiently dispersed by a ball milling method or using a planetary mixer to prepare a slurry.

### [Preparation Example 3] Preparation of Separator

The slurry for porous film coating, prepared according to Preparation Example 2, was applied onto a polyolefin porous substrate (polyethylene (PE), polypropylene (PP), and the like) to form an inorganic coating layer. As for the coating method, various methods, such as bar coating, dip coating, slot die coating, gravure coating, comma coating, and the like, are applicable.

In addition, after coating, drying was performed by applying hot-air drying methods such as jet blow drying and counter blow drying, as well as airless drying methods such as vacuum drying and infrared drying, wherein the drying temperature was in the range of 50°C to 80°C.

The inorganic coating layer had a thickness in the range of 1 to 6 µm on one or both sides. When the thickness is smaller than 1 µm, there is a problem in that the heat resistance of the separator is significantly reduced. When the thickness exceeds 6 µm, the separator has an extremely large thickness, which could lead to decreased battery energy density and increased battery resistance.

### Example 1

A binder copolymer for a separator was prepared according to Preparation Example 1 using 2-hydroxyethyl acrylate (2-HEA) as a monomer containing a hydroxyl group-containing straight-chain or branched-chain alkyl group having 1 to 20 carbon atoms. By using this copolymer, a slurry for porous film coating and a separator were prepared according to Preparation Examples 2 and 3, respectively.

### Example 2

A binder copolymer for a separator was prepared according to Preparation Example 1 using hydroxypropyl acrylate (HPA) as a monomer containing a hydroxyl group-containing straight-chain or branched-chain alkyl group having 1 to 20 carbon atoms. By using this copolymer, a slurry for porous film coating and a separator were prepared according to Preparation Examples 2 and 3, respectively.

### Example 3

A binder copolymer for a separator was prepared according to Preparation Example 1 using 4-hydroxybutyl acrylate (4-HBA) as a monomer containing a hydroxyl group-containing straight-chain or branched-chain alkyl group having 1 to 20 carbon atoms. By using this copolymer, a slurry for porous film coating and a separator were prepared according to Preparation Examples 2 and 3, respectively.

### Comparative Example 1

A binder copolymer for a separator, a slurry for porous film coating, and a separator were prepared in the same manner as in Example 1, except for further adding 10 parts by weight of BA for use instead of a monomer containing a hydroxyl group-containing straight-chain or branched-chain alkyl group having 1 to 20 carbon atoms.

### Comparative Example 2

A binder copolymer for a separator, a slurry for porous film coating, and a separator were prepared in the same manner as in Example 1, except for further adding 10 parts by weight of 2-EHA for use instead of a monomer containing a hydroxyl group-containing straight-chain or branched-chain alkyl group having 1 to 20 carbon atoms.

### Comparative Example 3

A binder copolymer for a separator, a slurry for porous film coating, and a separator were prepared in the same manner as in Example 1, except for further adding 10 parts by weight of MMA for use instead of a monomer containing a hydroxyl group-containing straight-chain or branched-chain alkyl group having 1 to 20 carbon atoms.

The monomer contents of each binder copolymer for the separators in Examples 1 to 3 and Comparative Examples 1 to 3 are shown in Table 1 below.

**[Table 1]**

| | Monomer content (parts by weight) | | | | | |
|---|---|---|---|---|---|---|
| | Monomer containing hydroxyl group-containing straight-chain or branched-chain alkyl group having 1 to 20 carbon atoms | AN | BA | MAA | 2-EHA | MMA |
| Example 1 | 10 (2-HEA) | 30 | 15 | 11 | 30 | 10 |
| Example 2 | 10 (HPA) | 30 | 15 | 11 | 30 | 10 |
| Example 3 | 10 (4-HBA) | 30 | 15 | 11 | 30 | 10 |
| Comparative Example 1 | - | 30 | 25 | 11 | 30 | 10 |
| Comparative Example 2 | - | 30 | 15 | 11 | 40 | 10 |
| Comparative Example 3 | - | 30 | 15 | 11 | 30 | 20 |

In Table 1, AN, BA, MAA, 2-EHA, MMA, 2-HEA, HPA, and 4-HBA denote acrylonitrile, butyl acrylate, methacrylic acid, 2-ethylhexyl acrylate, methyl methacrylate, 2-hydroxyethyl acrylate, hydroxypropyl acrylate, and 4-hydroxybutyl acrylate, respectively.

### [Evaluation Example 1] Dry Electrode Adhesion to Separator (Dry Feel Test)

Each of the separators, manufactured according to Examples 1 to 3 and Comparative Examples 1 to 3, was cut to dimensions of 25 mm in width and 70 mm in length and prepared.

A negative electrode (anode) was cut to dimensions of 25 mm in width and 40 mm in length, placed on the prepared separator so that the coated surface of the negative electrode was brought into contact with the coated surface of the separator, and pressed using a hot press at a temperature of 65°C and a pressure of 500 kg for 10 seconds.

The prepared specimen was mounted on a universal testing machine (UTM) (1 kgf load cell) so that the negative electrode was fixed at the top while the separator was fixed at the bottom, followed by measuring the 180° peel strength at a speed of 100 mm/min. The average value thereof was calculated through measurements performed on five or more specimens constructed per sample.

### [Evaluation Example 2] Air Permeability of Separator (Gurley test)

Each of the separators, manufactured according to Examples 1 to 3 and Comparative Examples 1 to 3, was cut to a circular shape with a diameter of 30 mm and prepared. The prepared separator was left unattended for 24 hours in a dry room under the following conditions: a temperature of 20°C and a humidity in the range of 0% to 5%. Then, the separator was placed in the measuring section of an air permeability measuring device (Ilshin Autoclave).

Thereafter, 100 ml of air per second was sprayed onto the separator, and the amount of gas passing through the separator for 5 seconds was measured.

### [Evaluation Example 3] Battery Resistance of Separator

Each of the separators, manufactured according to Examples 1 to 3 and Comparative Examples 1 to 3, was cut to a circular shape with a diameter of 18 mm and prepared.

The prepared separator was dried once again in a vacuum oven at 60°C for 12 hours, followed by fabricating a coil cell using a negative electrode (anode) containing graphite-silicon oxide and a positive electrode containing nickel-cobalt-manganese in a dry room under the following conditions: a temperature of 20°C and a humidity in the range of 0% to 5%.

The battery resistance value of the fabricated coin cell was measured using an impedance instrument manufactured by BioLogics.

The increased resistance value (Ω) was calculated as a percentage through comparison with a separator uncoated with a slurry for porous film coating.

The dry electrode adhesion, air permeability, and battery resistance of the separators of Examples 1 to 3 and Comparative Examples 1 to 3, measured according to Evaluation Examples 1 to 3, are shown in Table 2 below.

### [Evaluation Example 4] Migration in Separator

Each of the separators, manufactured according to Examples 1 to 3 and Comparative Examples 1 to 3, was cut to a square shape with a length of 20 mm and prepared.

The prepared separator was positioned such that the coating surface of the slurry for porous film coating faced upward. Then, after platinum (Pt) coating, the areas of the binder copolymer and inorganic particles (boehmite) distributed on the surface were measured by SEM, as shown in FIGS. 1 and 2, thereby confirming migration in the separator.

FIGS. 1A, 1B, and 1C correspond to the SEM observation results of the separators manufactured according to Examples 1, 2, and 3, respectively, and FIGS. 2A, 2B, and 2C correspond to the SEM observation results of the separators manufactured according to Comparative Examples 1, 2, and 3, respectively.

In FIGS. 1 and 2, spherical particles correspond to binder copolymers, and non-spherical platy particles correspond to inorganic particles (boehmite).

The degree of migration was quantified as the ratio of the area occupied by the binder copolymer with respect to the total area of the coating surface of the separator, confirmed by SEM.

In other words, the degree of migration was calculated as follows: (the area occupied by the binder copolymer/the total area of the coating surface of the separator) × 100.

The results measured according to Evaluation Examples 1 to 4 are shown in Table 2 below.

**[Table 2]**

| | Dry electrode adhesion (gf/20 mm) | Air permeability (sec/100 ml) | Battery resistance (%) | Migration (%) |
|---|---|---|---|---|
| Example 1 | 1.24 | 103 | 3.14 | 85 to 90 |
| Example 2 | 1.10 | 96 | 2.84 | 75 to 80 |
| Example 3 | 1.18 | 110 | 2.98 | 80 to 85 |
| Comparative Example 1 | 0.62 | 604 | 8.66 | 40 to 45 |
| Comparative Example 2 | 0.66 | 421 | 8.42 | 40 to 45 |
| Comparative Example 3 | 0.42 | 384 | 4.45 | 30 to 35 |

As shown in Table 2, the dry electrode adhesion to the separators of Examples 1 to 3, each using a monomer containing a hydroxyl group-containing straight-chain or branched-chain alkyl group having 1 to 20 carbon atoms, was superior to the dry electrode adhesion to the separators of Comparative Examples 1 to 3, each using a copolymer without any monomer containing a hydroxyl group-containing straight-chain or branched-chain alkyl group having 1 to 20 carbon atoms.

In the meantime, the dry electrode adhesion to each separator of Examples 1 to 3 was measured to be in the range of 0.90 gf/20 mm or more and 2 gf/20 mm or less.

In addition, the air permeability of the separators of Examples 1 to 3, each using a monomer containing a hydroxyl group-containing straight-chain or branched-chain alkyl group having 1 to 20 carbon atoms, was lower than the air permeability of the separators of Comparative Examples 1 to 3, each using a copolymer without any monomer containing a hydroxyl group-containing straight-chain or branched-chain alkyl group having 1 to 20 carbon atoms.

In the meantime, the air permeability of each separator of Examples 1 to 3 was measured to be in the range of 85 sec/100 ml or more and 150 sec/100 ml or less.

Furthermore, the battery resistance of cells to which the separators of Examples 1 to 3, each using a monomer containing a hydroxyl group-containing straight-chain or branched-chain alkyl group having 1 to 20 carbon atoms, were applied was lower than the battery resistance of cells to which the separators of Comparative Examples 1 to 3, each using a monomer containing a hydroxyl group-containing straight-chain or branched-chain alkyl group having 1 to 20 carbon atoms, were applied.

In the meantime, the battery resistance of the cells to which the separators of Examples 1 to 3, each using a monomer containing a hydroxyl group-containing straight-chain or branched-chain alkyl group having 1 to 20 carbon atoms, were applied was measured to be in the range of 1% or more and 4% or less.

In addition, the separators of Examples 1 to 3, each using a monomer containing a hydroxyl group-containing straight-chain or branched-chain alkyl group having 1 to 20 carbon atoms, had a higher surface area ratio of the binder polymer than the separators of Comparative Examples 1 to 3, each using a monomer containing a hydroxyl group-containing straight-chain or branched-chain alkyl group having 1 to 20 carbon atoms.

In the meantime, the surface area ratio of the binder polymer in the separators of Examples 1 to 3, each using a monomer containing a hydroxyl group-containing straight-chain or branched-chain alkyl group having 1 to 20 carbon atoms, was measured to be in the range of 60% or more and 95% or less.

Thus, the separators of Examples 1 to 3, each using a monomer containing a hydroxyl group-containing straight-chain or branched-chain alkyl group having 1 to 20 carbon atoms, were able to enhance electrode adhesion, reduce air permeability, lower battery resistance of the secondary battery, and further facilitate migration, compared to the separators of Comparative Examples 1 to 3 without any monomer containing a hydroxyl group-containing straight-chain or branched-chain alkyl group having 1 to 20 carbon atoms.

It is seen that a separator using a binder copolymer in which a monomer containing a hydroxyl group-containing straight-chain or branched-chain alkyl group having 1 to 20 carbon atoms is used within the above content range can facilitate migration and exhibit excellent adhesion and air permeability, thereby improving the battery resistance performance of a secondary battery.

In addition, the binder copolymer in which a monomer containing a hydroxyl group-containing straight-chain or branched-chain alkyl group having 1 to 20 carbon atoms is used within the above content range can improve stability during battery transfer and operation through enhanced adhesion, reduce defect rates during process application, and improve productivity.

In the meantime, the binder copolymer in which a monomer containing a hydroxyl group-containing straight-chain or branched-chain alkyl group having 1 to 20 carbon atoms is used within the above content range can be applied to a secondary battery requiring high-voltage and high-current properties through lowered battery resistance.

The scope of the present disclosure is defined by the appended claims rather than the detailed description presented above. All changes or modifications derived from the meaning and scope of the claims and the concept of equivalents should be construed to fall within the scope of the present disclosure.

### Industrial Applicability

A copolymer of the present disclosure can increase electrode adhesion to a separator substrate by facilitating migration, and can improve the heat resistance and air permeability of a separator.

In addition, the copolymer of the present disclosure can reduce defect rates during the lamination process in battery assembly, minimize void formation, and enhance air permeability and ionic conductivity in the electrolyte.

In the meantime, by using the copolymer of the present disclosure, the adhesion of the separator can be maximized, and ultimately, the electrical resistance properties and stability of a battery can be enhanced while minimizing battery defects.

## Claims

1. A copolymer comprising:
an acrylonitrile-based monomer unit;
an acrylate-based monomer unit comprising a straight-chain alkyl group having 1 to 20 carbon atoms;
an acrylate-based monomer unit comprising a branched-chain alkyl group having 3 to 10 carbon atoms;
an acrylic acid-based monomer unit; and
a monomer unit comprising a hydroxyl group-containing straight-chain or branched-chain alkyl group having 1 to 20 carbon atoms.

2. The copolymer of claim 1, wherein the copolymer, based on 100 wt% of the total weight thereof, comprises:
1 wt% or more and 40 wt% or less of the acrylonitrile-based monomer unit,
1 wt% or more and 35 wt% or less of the acrylate-based monomer unit comprising the straight-chain alkyl group having 1 to 20 carbon atoms,
10 wt% or more and 50 wt% or less of the acrylate-based monomer unit comprising the branched-chain alkyl group having 3 to 10 carbon atoms,
1 wt% or more and 20 wt% or less of the acrylic acid-based monomer unit, and
1 wt% or more and 20 wt% or less of the monomer unit comprising the hydroxyl group-containing straight-chain or branched-chain alkyl group having 1 to 10 carbon atoms.

3. The copolymer of claim 1, wherein the acrylate-based monomer unit comprising the straight-chain alkyl group having 1 to 20 carbon atoms is formed by polymerization of methyl acrylate, methyl methacrylate, ethyl acrylate, ethyl methacrylate, propyl acrylate, propyl methacrylate, butyl acrylate, butyl methacrylate, lauryl acrylate, lauryl methacrylate, stearyl acrylate, stearyl methacrylate, or a combination thereof,
the acrylate-based monomer unit comprising the branched-chain alkyl group having 3 to 10 carbon atoms is formed by polymerization of isopropyl acrylate, isopropyl methacrylate, sec-butyl acrylate, sec-butyl methacrylate, tert-butyl acrylate, tert-butyl methacrylate, 2-ethylhexyl acrylate, 2-ethylhexyl methacrylate, or a combination thereof,
the acrylic acid-based monomer unit is formed by polymerization of acrylic acid, methacrylic acid, or a combination thereof, and
the acrylonitrile-based monomer unit is formed by polymerization of acrylonitrile, methacrylonitrile, or a combination thereof.

4. The copolymer of claim 1, wherein the monomer unit comprising the hydroxyl group-containing straight-chain or branched-chain alkyl group having 1 to 10 carbon atoms is formed by polymerization of 2-hydroxyethyl acrylate, hydroxypropyl acrylate, 4-hydroxybutyl acrylate, or a combination thereof.

5. The copolymer of claim 1, wherein the acrylic acid-based monomer unit is bonded to an alkali metal.

6. The copolymer of claim 1, further comprising, based on 100 wt% of the total weight thereof, 15 wt% or less of a vinyl acetate-based monomer unit.

7. The copolymer of claim 1, wherein the copolymer comprises a monomer repeating unit represented by Formula 1 below, 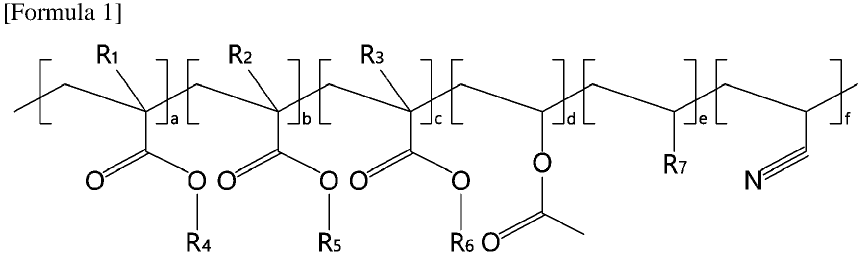 wherein in Formula 1,
R₁ to R₃ are each independently hydrogen, a straight-chain or branched-chain hydrocarbon having 1 to 4 carbon atoms, or a combination thereof,
R₄ is a straight-chain alkyl group having 1 to 20 carbon atoms,
R₅ is a branched-chain alkyl group having 3 to 10 carbon atoms,
R₆ is a hydroxyl group-containing straight-chain or branched-chain alkyl group having 1 to 10 carbon atoms,
R₇ is COOM,
where M is hydrogen, an alkali metal, or a combination thereof,
0.01 ≤ a ≤ 0.35, 0.1 ≤ b ≤ 0.5, 0.01 ≤ c ≤ 0.2, 0 ≤ d ≤ 0.15, 0.01 ≤ e ≤ 0.2, and 0.01 ≤ f ≤ 0.4, and $a + b + c + d + e + f = 1 .$

8. The copolymer of claim 1, wherein the copolymer is a random or block copolymer.

9. A slurry composition comprising:
the copolymer of any one of claims 1 to 8; and
inorganic particles.

10. A separator comprising:
the slurry composition of claim 9.

11. The separator of claim 10, wherein the copolymer occupies 60% or more of the total area of a coating layer of the slurry composition on a surface of the separator, as measured by scanning electron microscopy.

12. A secondary battery comprising:
the separator of claim 10.
